# EUROPÄISCHE PATENTSCHRIFT

(11) **EP 2 243 689 B1**
(45) Veröffentlichungstag und Bekanntmachung des Hinweises auf die Patenterteilung: **14.06.2017**
(21) Anmeldenummer: 10004243.1
(22) Anmeldetag: 21.04.2010
(51) Int. Cl.: B62D 21/12, B62D 29/00, B62D 65/04, B62D 25/20

(54) **Aufbaustruktur für eine Karosserie eines Fahrzeugs**
Assembly structure for a body of a vehicle
Structure d'assemblage pour la carrosserie d'un véhicule

(30) Priorität: 22.04.2009 DE 102009018441
(43) Veröffentlichungstag der Anmeldung: 27.10.2010
(73) Patentinhaber: Audi AG, 85045 Ingolstadt (DE)
(72) Erfinder: Winkler, Andreas, 74080 Heilbronn (DE); Döll, Jochen, 74080 Heilbronn (DE)
(74) Vertreter: Patzelt, Heike Anna Maria

(56) Entgegenhaltungen:
- EP-A2- 0 295 662
- WO-A2-03/033332
- DE-A1- 10 340 952
- DE-A1-102004 057 632
- US-B1- 6 470 990

## Beschreibung

Die Erfindung betrifft eine Aufbaustruktur für eine Karosserie eines Fahrzeugs in Modulbauweise gemäß dem Oberbegriff des Patentanspruchs 1.

Die Aufbaustruktur für eine Karosserie eines Fahrzeugs ist eine Tragkonstruktion, an der einzelne Bauteile des Fahrzeugs, wie der Motor, die Achsen, die Lenkung oder die Federung befestigbar sind. Immer häufiger sind derartige Aufbaustrukturen in Modulbauweise hergestellt. So zeigt die DE 10 2007 021 876 A1 eine gattungsgemäße Aufbaustruktur für eine Karosserie eines Fahrzeugs in dieser Modulbauweise. Die Aufbaustruktur weist eine ein Hinterwagenmodul und ein Dachmodul umfassende Hauptmoduleinheit und eine sich nach vorne anschließende Vorderwagenmoduleinheit auf, welche ein sich nach hinten hin in das Hauptmodul erstreckendes Bodenmodul umfasst.

Aus der EP 1 538 072 B1 ist ebenfalls eine Aufbaustruktur für eine Karosserie eines Fahrzeugs in Modulbauweise bekannt, bei welcher mehrere große Einzelmodule vorgesehen sind, aus welchen die Karosserie im Wesentlichen zusammengesetzt werden kann. Die Aufbaustruktur weist eine Vorderwagenmoduleinheit auf, die über eine Fahrgastzellenmoduleinheit mit einer Hinterwagenmoduleinheit verbunden ist.

Aus der DE 42 43 186 A1 ist eine modular aufgebaute Karosserie eines Fahrzeugs bekannt, dessen Vorderwagenmodul aus Metall, dessen Fahrgastzellenmodul aus Kunststoff und dessen Hinterwagenmodul wiederum aus Metall besteht. Das Vorderwagenmodul ist hierbei stoßenergieabsorptionsfähig ausgestaltet und dient als Montageeinheit für alle Antriebskomponenten des Fahrzeugs.

Aus der US 6,470,990 B1 ist eine Aufbaustruktur mit einem mittleren Karosseriemodul und einem hinteren Karosseriemodul und einem vorderem Karosseriemodul gekannt, wobei eine Fahrgastzelle auf dem Mittelkarosseriemodul aufgebaut ist und eine Brandschutzwand und ein Bodenmodul umfasst.

Aus der EP 0 295 662 A2 ist ein Kraftfahrzeug bekannt, dessen Aufbau einen Mittelrahmen, einen Frontrahmen und einen Heckrahmen umfasst, wobei der Mittelrahmen über Befestigungsmittel mit dem Frontrahmen und dem Heckrahmen verbunden ist. Der beschriebene Mittelrahmen entspricht einer Fahrgastzellenmoduleinheit, welche ein Paar seitliche Längsträger und ein Paar Querträger umfasst, welche die beiden Längsträger miteinander verbindet. Zudem umfasst der Mittelrahmen zwei senkrechte Säulen, welche jeweils mit einem Längsträger und über einen Befestigungsquerträger miteinander verbunden sind, und einen Dachrahmen.

Aus der DE 103 40 952 A1 ist ein Kraftfahrzeug bekannt, dessen Aufbau ein Mittelteil, ein Frontteil und ein Heckteil umfasst. Der offenbarte Mittelteil entspricht einer Fahrgastzellenmoduleinheit und weist zum Frontteil und Heckteil hin gerichtete erste und zweite Querwandstrukturen auf, mit welchen das Frontteil bzw. Heckteil verbunden ist. Die Fahrgastzellenmoduleinheit besitzt im Bereich der integrierten zweiten Querwandstruktur einen Aufnahmeraum für einen Kraftstoffbehälter, der mittels des Heckteils abgedeckt ist. Des Weiteren ist im Bereich der ersten Querwandstruktur wenigstens ein das Frontteil bildender Deformationsträger weggeführt, wobei das Frontteil und das Heckteil fest mit dem Mittelteil verbunden sind.

Aufgabe der Erfindung ist es, eine Aufbaustruktur für eine Karosserie eines Kraftfahrzeugs anzugeben, die bei einfacher und kostengünstiger Konstruktion eine ausreichende Steifigkeit aufweist.

Erfindungsgemäß wird diese Aufgabe durch Bereitstellung einer Aufbaustruktur für eine Karosserie eines Kraftfahrzeugs mit den Merkmalen des Patentanspruchs 1 gelöst.

Vorteilhafte Ausführungsformen und Weiterbildungen der Erfindung sind in den abhängigen Ansprüchen angegeben.

Um eine Aufbaustruktur für eine Karosserie eines Kraftfahrzeugs anzugeben, die bei einfacher und kostengünstiger Konstruktion eine ausreichende Steifigkeit aufweist, sind eine Mittelmoduleinheit und eine Tunnelmoduleinheit vorgesehen, die zwischen der Fahrgastzellenmoduleinheit und der Hinterwagenmoduleinheit angeordnet sind.

Erfindungsgemäß ist die Mittelmoduleinheit als einstückiges Bauteil ausgebildet. In vorteilhafter Weise kann hierdurch die Mittelmoduleinheit aus mehreren, an unterschiedliche Anwendungsfälle bzw. Karosserietypen angepasste Einzelmodulen gefertigt und dennoch einfach in die Aufbaustruktur integriert werden, da die Einzelmodule bzw. die einzelnen Bauteile der Mittelmoduleinheit vor der Integration der Mittelmoduleinheit in die Aufbaustruktur miteinander verbunden werden.

Die Mittelmoduleinheit kann vorzugsweise sehr steif ausgebildet werden, um hierdurch eine ausreichend große Stabilität der Karosserie des Kraftfahrzeugs zu gewährleisten, indem sich die angrenzenden Module bzw. Moduleinheiten in vorteilhafter Weise an dieser steifen Mittelmoduleinheit abstützen können. Insbesondere bei großen Personenkraftfahrzeugen ist die Anordnung der Mittelmoduleinheit besonders vorteilhaft, da bei diesen Fahrzeugen eine große Stabilität der Karosserie und insbesondere der Fahrgastzelle notwendig ist. Ein weiterer Vorteil der Erfindung ist die einfache Konstruktion der Aufbaustruktur, da die erfindungsgemäße Mittelmoduleinheit ohne großen Aufwand in die Aufbaustruktur integrierbar ist. Hierdurch kann auf einfache und schnelle Weise eine Montage der Aufbaustruktur erfolgen. Da die steife Mittelmoduleinheit an die Fahrgastzellenmoduleinheit angrenzt, erhöht diese zusätzlich die Sicherheit von in der Fahrgastzellenmoduleinheit befindlichen Insassen insbesondere bei einem Aufprall im Bereich der Hinterwagenmoduleinheit des Fahrzeugs, wodurch Intrusionen in die Fahrgastzellenmoduleinheit gehemmt werden. In vorteilhafter Weise dient die Mittelmoduleinheit somit auch zum Schutz der Fahrgastzellenmoduleinheit.

Bevorzugt ist die Mittelmoduleinheit zumindest dazu vorgesehen, mindestens.eine Tankeinheit und/oder eine Antriebseinheit wenigstens teilweise aufzunehmen. In vorteilhafter Weise sind hierdurch die von der Mittelmoduleinheit aufgenommenen Einheiten besonders geschützt. Somit wird im Falle eines Aufpralls eine Beschädigung dieser empfindlichen Einheiten weitestgehend verhindert.

In einer Ausgestaltung der erfindungsgemäßen Aufbaustruktur ist die Mittelmoduleinheit nach dem Verbinden der Fahrgastzellenmoduleinheit und der Hinterwagenmoduleinheit in die Aufbaustruktur eingefügt. In einer weiteren Ausgestaltung der erfindungsgemäßen Aufbaustruktur ist die Fahrgastzellenmoduleinheit über die Mittelmoduleinheit mit der Hinterwagenmoduleinheit verbunden. In beiden Fällen ist eine einfache und schnelle Montage bzw. Demontage der Aufbaustruktur möglich, da hierbei große, vorzugsweise vormontierte Moduleinheiten auf einfache Weise miteinander zu verbinden sind. Hierdurch können auch kleine Toleranzvorgaben eingehalten werden, da wenige großvolumige Bauteile toleranzgenauer montiert werden können. Zudem können die Fahrgastzellenmoduleinheit und/oder ein Dachmodul bei Umgehung der Mittelmoduleinheit direkt mit der Hinterwagenmoduleinheit verbunden werden.

In einer bevorzugten Ausgestaltung der erfindungsgemäßen Aufbaustruktur erstreckt sich die Mittelmoduleinheit im Wesentlichen über die gesamte, in Richtung einer Querachse verlaufende Breite der Aufbaustruktur und/oder im Wesentlichen über die gesamte, in Richtung einer Hochachse verlaufende Höhe der Aufbaustruktur. In vorteilhafter Weise steht hierdurch sowohl die gesamte Höhe als auch die gesamte Breite der Aufbaustruktur zur Erhöhung der Steifigkeit der Aufbaustruktur zur Verfügung. Auch hier wird im Falle eines Aufpralls die Fahrgastzelle entlastet und die Sicherheit der Fahrzeuginsassen erhöht.

Des Weiteren umfasst die Fahrgastzellenmoduleinheit ein Vorderwagenmodul, ein Bodenmodul, ein Dachmodul und/oder ein Tunnelmodul. In einer besonders bevorzugten Ausgestaltung der erfindungsgemäßen Aufbaustruktur erstreckt sich die Mittelmoduleinheit im Wesentlichen zwischen dem Bodenmodul, dem Dachmodul und der Hinterwagenmoduleinheit. In vorteilhafter Weise erfolgt hierdurch eine räumliche Trennung zwischen Fahrgastzellenmoduleinheit und Hinterwagenmoduleinheit des Fahrzeugs, so dass im Übergangsbereich zwischen der Fahrgastzellenmoduleinheit und der Hinterwagenmoduleinheit des Fahrzeugs die Anordnung einer steifen Mittelmoduleinheit möglich ist. Im Ergebnis lässt sich somit eine Aufbaustruktur mit erhöhter Steifigkeit dadurch realisieren, indem die Mittelmoduleinheit zwischen der Fahrgastzellenmoduleinheit und der Hinterwagenmoduleinheit vorgesehen ist.

Vorzugsweise sind die einzelnen Moduleinheiten und/oder Module aus mindestens einem einen Kunststoff oder ein Metall umfassenden Werkstoff und/oder mindestens einem Werkstoffverbund hergestellt. In vorteilhafter Weise wird hierdurch auf einfache Weise eine an die Fahrzeuganforderungen angepasste Ausführung der einzelnen Moduleinheiten und/oder Module ermöglicht.

Eine bevorzugte Realisierung der erfindungsgemäßen Aufbaustruktur sieht vor, dass es sich bei dem Werkstoffverbund um einen Faserverbundwerkstoff handelt. Diese Ausführung ermöglicht in besonders vorteilhafter Weise eine feine Variierung der Steifigkeit der einzelnen Moduleinheiten und/oder Module über die Anzahl der Schichten des Faserverbundwerkstoffes.

In vorteilhafter Weiterbildung der Erfindung sind der mindestens eine Werkstoff und/oder der mindestens eine Werkstoffverbund der einzelnen Moduleinheiten und/oder Module in Abhängigkeit von einer auf die Moduleinheiten und/oder Module einwirkenden Belastung ausgewählt. In vorteilhafter Weise kann hierdurch die Aufbaustruktur des Fahrzeugs sehr leicht, aber dennoch verwindungssteif ausgeführt werden. Die erfindungsgemäße Aufbaustruktur kann aber trotz Leichtbauweise einen großen Teil von eventuell auf das Fahrzeug einwirkenden Belastungen bzw. am Fahrzeug angreifenden Kräften aufnehmen. In einer besonders vorteilhaften Weiterbildung der Erfindung werden die Moduleinheiten vor dem Verbau aus Einzelteilen zusammengesetzt.

Vorteilhafte Ausführungsformen der Erfindung sind in den Zeichnungen dargestellt und werden nachfolgend beschrieben.

Dabei zeigen:
- Fig. 1: eine schematische Darstellung von einzelnen Moduleinheiten einer Aufbaustruktur für eine Karosserie eines Fahrzeugs, wobei die erfindungsgemäße Mittelmoduleinheit und die erfindungsgemäße Tunnelmoduleinheit erkennbar sind, und
- Fig. 2: eine perspektivische Ansicht der Aufbaustruktur mit der erfindungsgemäßen Mittelmoduleinheit, und
- Fig. 3: eine schematische Ansicht von unten auf die Aufbaustruktur.

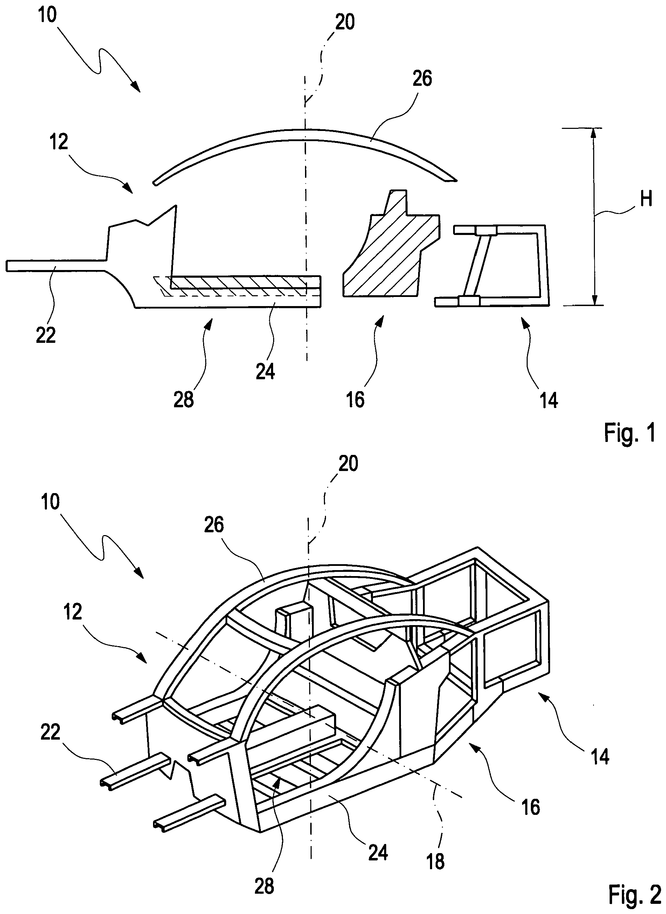

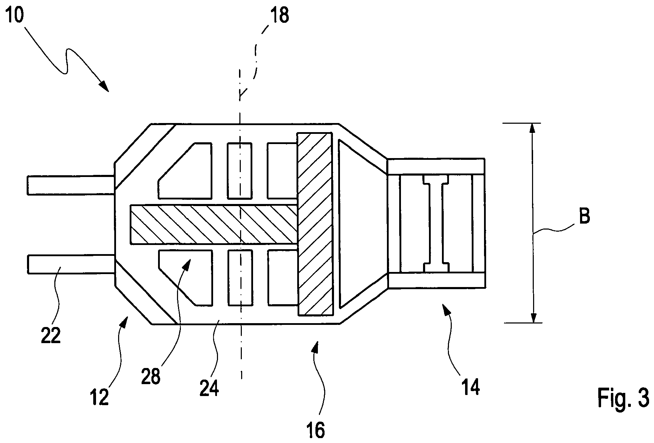

Die Figuren 1 bis 3 zeigen eine Aufbaustruktur 10 für eine Karosserie eines Fahrzeugs, insbesondere eines Personenkraftfahrzeugs. Die Aufbaustruktur 10 ist in Modulbauweise ausgeführt, d.h. die Aufbaustruktur 10 besteht aus mindestens einer zumindest zwei Module 22, 24, 26 umfassende Moduleinheit 12, 14, 16, 28 bzw. aus einzelnen Modulen 22, 24, 26, wobei die Module aus einzelnen Modulelementen bestehen können.

In vorteilhafter Weise sind die einzelnen Moduleinheiten 12, 14, 16, 28 und/oder Module 22, 24, 26 aus mindestens einem einen Kunststoff oder ein Metall umfassenden Werkstoff und/oder mindestens einem Werkstoffverbund hergestellt. Hierbei ist der mindestens eine Werkstoff und/oder der mindestens eine Werkstoffverbund der einzelnen Moduleinheiten 12, 14, 16, 28 und/oder Module 22, 24, 26 in Abhängigkeit von einer auf die Moduleinheiten 12, 14, 16, 28 und/oder Module 22, 24, 26 einwirkenden Belastung ausgewählt. Besonders bevorzugt handelt es sich bei dem Werkstoffverbund um einen Faserverbundwerkstoff (FVVV) und hierbei insbesondere um einen Faserkunststoffverbund (FKV). Besonders bevorzugt handelt es sich bei dem Metall um ein Leichtmetall, wie beispielsweise Aluminium oder eine Aluminium-Legierung.

Gemäß dem in Fig. 1 bis 3 dargestellten Ausführungsbeispiel weist die erfindungsgemäße Aufbaustruktur 10 zumindest eine Fahrgastzellenmoduleinheit 12 und eine Hinterwagenmoduleinheit 14 auf. Im vorliegenden Ausführungsbeispiel umfasst die Fahrgastzellenmoduleinheit 12 ein Vorderwagenmodul 22, ein Bodenmodul 24 und ein Dachmodul 26 gemäß Fig. 1 und 2. Alternativ hierzu können das Vorderwagenmodul 22 und das Bodenmodul 24 auch eine Einheit bilden. Zusätzlich kann die Fahrgastzellenmoduleinheit 12 auch ein Tunnelmodul umfassen.

Um eine Aufbaustruktur für eine Karosserie eines Kraftfahrzeugs anzugeben, die bei einfacher und kostengünstiger Konstruktion eine ausreichende Steifigkeit aufweist, sind erfindungsgemäß eine Mittelmoduleinheit 16 und eine Tunnelmoduleinheit 28 vorgesehen, die zwischen der Fahrgastzellenmoduleinheit 12 und der Hinterwagenmoduleinheit 14 angeordnet sind. Derartige Mittelmoduleinheiten 16 und/oder Tunnelmoduleinheiten 28 lassen sich in einer Vielzahl verschiedener Fahrzeuge einsetzen, so kann die erfindungsgemäße Aufbaustruktur 10 nicht nur in klassischen Personenkraftfahrzeugen, sondern beispielsweise auch in Omnibussen oder Lastkraftwagen eingesetzt werden.

In vorteilhafter Weise kann die Mittelmoduleinheit 16 aus einzelnen Modulen bestehen, die jedoch miteinander verbunden sind, so dass die Mittelmoduleinheit 16 als einstückiges Bauteil ausgebildet ist. Die Mittelmoduleinheit 16 kann auf zwei Arten in die Aufbaustruktur 10 integriert werden. Zum einen kann die Mittelmoduleinheit 16 nach dem Verbinden der Fahrgastzellenmoduleinheit 12 und der Hinterwagenmoduleinheit 14 in die Aufbaustruktur 10 eingefügt werden. Zum anderen kann die Fahrgastzellenmoduleinheit 12 über die Mittelmoduleinheit 16 mit der Hinterwagenmoduleinheit 14 verbunden werden. In beiden Fällen wird die Mittelmoduleinheit 16 zur Fertigungsvereinfachung als einstückiges Bauteil integriert.

Die Mittelmoduleinheit 16 ist zumindest dazu vorgesehen, mindestens eine hier nicht dargestellte Tankeinheit und/oder eine ebenfalls hier nicht dargestellte Antriebseinheit des Fahrzeugs wenigstens teilweise aufzunehmen, wobei diese Aufzählung der Aufgaben selbstverständlich nicht als Einschränkung zu sehen ist. Die Tankeinheit und/oder die Antriebseinheit bzw. auch weitere Einheiten können hierbei an der Mittelmoduleinheit 16 befestigt werden, so dass diese auch als Funktionsträger dient und somit als Funktionsmodul ausgeführt ist.

Die Mittelmoduleinheit 16 erstreckt sich im Wesentlichen zwischen dem Bodenmodul 24, dem Dachmodul 26 und der Hinterwagenmoduleinheit 14. Im vorliegenden Ausführungsbeispiel erstreckt sich die Mittelmoduleinheit 16 gemäß Fig. 2 vorzugsweise im Wesentlichen über die gesamte, in Richtung einer Querachse 18 verlaufende Breite B der Aufbaustruktur 10 und im Wesentlichen über die gesamte, in Richtung einer Hochachse 20 verlaufende Höhe H der Aufbaustruktur 10.

Wie bereits erwähnt, sind im vorliegenden Ausführungsbeispiel die Werkstoffe und/oder Werkstoffverbunde der einzelnen Moduleinheiten 12, 14, 16, 28 und/oder Module 22, 24, 26 vorzugsweise in Abhängigkeit von einer auf die Moduleinheiten 12, 14, 16, 28 und/oder Module 22, 24, 26 einwirkenden Belastung ausgewählt. So besteht das Dachmodul 26 vorzugsweise aus einem Werkstoffverbund, der Metall und einen Faserverbundwerkstoff umfasst, wobei die eigentliche Dachfläche bzw. einzelne Profile aus dem Faserverbundwerkstoff bestehen. Das Vorderwagenmodul 22 und das Bodenmodul 24 bestehen vorzugsweise aus Metall, wobei einzelne Teilbereiche auch aus einem Faserverbundwerkstoff gefertigt sein können. Die Hinterwagenmoduleinheit 14 besteht vorzugsweise hauptsächlich aus Metall, wobei einzelne Profile auch aus einem Faserverbundwerkstoff ausgeführt sein können. Die Mittelmoduleinheit 16 besteht hauptsächlich aus einem Faserverbundwerkstoff und hierbei vorzugsweise aus einem kohlenstofffaserverstärkten Kunststoff (CFK), wobei einzelne Teile bzw. Profile auch in Metall ausgeführt sein können. Bevorzugt werden die Moduleinheiten 12, 14, 16, 28 vor dem Verbau aus Einzelteilen zusammengesetzt.

### BEZUGSZEICHENLISTE

- 10: Aufbaustruktur
- 12: Fahrgastzellenmoduleinheit
- 14: Hinterwagenmoduleinheit
- 16: Mittelmoduleinheit
- 18: Querachse
- 20: Hochachse
- 22: Vorderwagenmodul
- 24: Bodenmodul
- 26: Dachmodul
- 28: Tunnelmoduleinheit

- B: Breite der Aufbaustruktur
- H: Höhe der Aufbaustruktur

## Patentansprüche

1. Aufbaustruktur für eine Karosserie eines Fahrzeugs in Modulbauweise mit einer Fahrgastzellenmoduleinheit (12) und einer Hinterwagenmoduleinheit (14), **gekennzeichnet durch** eine Mittelmoduleinheit (16) und eine Tunnelmoduleinheit (28), die zwischen der Fahrgastzellenmoduleinheit (12) und der Hinterwagenmoduleinheit (14) angeordnet sind, wobei die Mittelmoduleinheit (16) als einstückiges Bauteil ausgebildet ist.

2. Aufbaustruktur nach Anspruch 1, **dadurch gekennzeichnet, dass** die Mittelmoduleinheit (16) zumindest dazu vorgesehen ist, mindestens eine Tankeinheit und/oder eine Antriebseinheit des Fahrzeugs wenigstens teilweise aufzunehmen.

3. Aufbaustruktur nach Anspruch 1 oder 2, **dadurch gekennzeichnet, dass** die Fahrgastzellenmoduleinheit (12) über die Mittelmoduleinheit (16) mit der Hinterwagenmoduleinheit (14) verbunden ist.

4. Aufbaustruktur nach einem der Ansprüche 1 bis 3, **dadurch gekennzeichnet, dass** die Fahrgastzellenmoduleinheit (12) und/oder ein Dachmodul (26) bei Umgehung der Mittelmoduleinheit (16) direkt mit der Hinterwagenmoduleinheit (14) verbunden sind.

5. Aufbaustruktur nach einem der Ansprüche 1 bis 4, **dadurch gekennzeichnet, dass** sich die Mittelmoduleinheit (16) im Wesentlichen über die gesamte, in Richtung einer Querachse (18) verlaufende Breite (B) der Aufbaustruktur (10) und/oder im Wesentlichen über die gesamte, in Richtung einer Hochachse (20) verlaufende Höhe (H) der Aufbaustruktur (10) erstreckt.

6. Aufbaustruktur nach einem der Ansprüche 1 bis 5, **dadurch gekennzeichnet, dass** die Fahrgastzellenmoduleinheit (12) ein Vorderwagenmodul (22), ein Bodenmodul (24) und ein Dachmodul (26) umfasst.

7. Aufbaustruktur nach Anspruch 6, **dadurch gekennzeichnet, dass** sich die Mittelmoduleinheit (16) im Wesentlichen zwischen dem Bodenmodul (24), dem Dachmodul (26) und der Hinterwagenmoduleinheit (14) erstreckt.

8. Aufbaustruktur nach einem der Ansprüche 1 bis 7, **dadurch gekennzeichnet, dass** die Fahrgastzellenmoduleinheit (12) ein Tunnelmodul (28) umfasst.

9. Aufbaustruktur nach einem der Ansprüche 1 bis 8, **dadurch gekennzeichnet, dass** die einzelnen Moduleinheiten (12, 14, 16, 28) und/oder Module (22, 24, 26) aus mindestens einem einen Kunststoff oder ein Metall umfassenden Werkstoff und/oder mindestens einem Werkstoffverbund hergestellt sind.

10. Aufbaustruktur nach Anspruch 9, **dadurch gekennzeichnet, dass** es sich bei dem Werkstoffverbund um einen Faserverbundwerkstoff handelt.

11. Aufbaustruktur nach Anspruch 9 oder 10, **dadurch gekennzeichnet, dass** Steifigkeit und/oder Gewicht der einzelnen Moduleinheiten (12, 14, 16, 28) und/oder Module (22, 24, 26) durch Auswahl des mindestens einen Werkstoffs und/oder des mindestens einen Werkstoffverbunds in Abhängigkeit von einer auf die Moduleinheiten (12, 14, 16, 28) und/oder Module (22, 24, 26) einwirkenden Belastung erfolgt, wobei die Steifigkeit der einzelnen Moduleinheiten (12, 14, 16, 28) und/oder Module (22, 24, 26) über eine Anzahl der Schichten des Faserverbundwerkstoffs variierbar ist.

12. Aufbaustruktur nach einem der Ansprüche 1 bis 11, **dadurch gekennzeichnet, dass** die Moduleinheiten (12, 14, 16, 28) vor dem Verbau aus Einzelteilen zusammengesetzt werden.

## Claims

1. Body structure for a chassis of a vehicle in a modular design having a passenger compartment modular unit (12) and a rear carriage modular unit (14), **characterised by** a middle modular unit (16) and a tunnel modular unit (28) which are arranged between the passenger compartment modular unit (12) and the rear carriage modular unit (14) wherein the middle modular unit (16) is designed as a one-piece component.

2. Body structure according to claim 1, **characterised in that** the middle modular unit (16) is provided at least to at least partially accommodate at least one tank unit and/or a drive unit of the vehicle.

3. Body structure according to claim 1 or 2, **characterised in that** the passenger compartment modular unit (12) is connected to the rear carriage modular unit (14) via the middle modular unit (16).

4. Body structure according to any one of claims 1 to 3, **characterised in that** the passenger compartment modular unit (12) and/or a roof module (26) are directly connected to the rear carriage modular unit (14) when bypassing the middle modular unit (16).

5. Body structure according to any one of claims 1 to 4, **characterised in that** the middle modular unit (16) extends substantially over the entire width (B) of the body structure (10) running in the direction of a transverse axis (18) and/or substantially over the entire height (H) of the body structure (10) running in the direction of a vertical axis (20).

6. Body structure according to any one of claims 1 to 5, **characterised in that** the passenger compartment modular unit (12) comprises a front carriage module (22), a floor module (24) and a roof module (26).

7. Body structure according to claim 6, **characterised in that** the middle modular unit (16) extends substantially between the floor module (24), the roof module (26) and the rear carriage modular unit (14).

8. Body structure according to any one of claims 1 to 7, **characterised in that** the passenger compartment modular unit (12) comprises a tunnel module (28).

9. Body structure according to any one of claims 1 to 8, **characterised in that** the individual modular units (12, 14, 16, 28) and/or modules (22, 24, 26) are manufactured from at least one material comprising a plastic or a metal and/or at least one composite material.

10. Body structure according to claim 9, **characterised in that** the composite material is a fibre composite.

11. Body structure according to claim 9 or 10, **characterised in that** stiffness and/or weight of the individual modular units (12, 14, 16, 28) and/or modules (22, 24, 26) takes place by selecting the at least one material and/or the at least one composite material as a function of a load acting on the modular units (12, 14, 16, 28) and/or modules (22, 24, 26) wherein the stiffness of the individual modular units (12, 14, 16, 28) and/or modules (22, 24, 26) can be varied via a number of layers of the fibre composite.

12. Body structure according to any one of claims 1 to 11, **characterised in that** the modular units (12, 14, 16, 28) are combined prior to the sheeting from individual parts.

## Revendications

1. Structure pour une carrosserie d'un véhicule dans un mode de construction modulaire avec une unité modulaire d'habitacle (12) et une unité modulaire de train arrière (14), **caractérisée par** une unité modulaire centrale (16) et par une unité modulaire en tunnel (28) qui sont agencées entre l'unité modulaire d'habitacle (12) et l'unité modulaire de train arrière (14), l'unité modulaire centrale (16) étant conçue comme un élément d'une seule pièce.

2. Structure de carrosserie selon la revendication 1, **caractérisée en ce que** l'unité modulaire centrale (16) est prévue au moins pour loger au moins en partie au moins une unité de réservoir et/ou une unité motrice du véhicule.

3. Structure de carrosserie selon la revendication 1 ou 2, **caractérisée en ce que** l'unité modulaire d'habitacle (12) est assemblée à l'unité modulaire de train arrière (14) par l'intermédiaire de l'unité modulaire centrale (16).

4. Structure de carrosserie selon l'une des revendications 1 à 3, **caractérisée en ce que** l'unité modulaire d'habitacle (12) et/ou un module de toit (26) sont assemblés directement à l'unité modulaire de train arrière (14) en évitant l'unité modulaire centrale (16).

5. Structure de carrosserie selon l'une des revendications 1 à 4, **caractérisée en ce que** l'unité modulaire centrale (16) s'étend globalement sur toute la largeur (B), suivant la direction d'un axe transversal (18), de la structure de carrosserie (10) et/ou globalement sur toute la hauteur (H), suivant la direction d'un axe vertical (20), de la structure de carrosserie (10).

6. Structure de carrosserie selon l'une des revendications 1 à 5, **caractérisée en ce que** l'unité modulaire d'habitacle (12) comprend un module de train avant (22), un module de plancher (24) et un module de toit (26).

7. Structure de carrosserie selon la revendication 6, **caractérisée en ce que** l'unité modulaire centrale (16) s'étend globalement entre le module de plancher (24), le module de toit (26) et l'unité modulaire de train arrière (14).

8. Structure de carrosserie selon l'une des revendications 1 à 7, **caractérisée en ce que** l'unité modulaire d'habitacle (12) comprend un module en tunnel (28).

9. Structure de carrosserie selon l'une des revendications 1 à 8, **caractérisée en ce que** les différentes unités modulaires (12, 14, 16, 28) et/ou les différents modules (22, 24, 26) sont fabriqués en au moins un matériau comprenant un plastique ou un métal et/ou en au moins un matériau composite.

10. Structure de carrosserie selon la revendication 9, **caractérisée en ce que** le matériau composite est un matériau composite renforcé par des fibres.

11. Structure de carrosserie selon la revendication 9 ou 10, **caractérisée en ce que** la rigidité et/ou le poids des différentes unités modulaires (12, 14, 16, 28) et/ou des différents modules (22, 24, 26) résultent du choix de l'au moins un matériau et/ou de l'au moins un matériau composite en fonction d'une charge agissant sur les unités modulaires (12, 14, 16, 28) et/ou modules (22, 24, 26), la rigidité des différentes unités modulaires (12, 14, 16, 28) et/ou des différents modules (22, 24, 26) étant modifiable par le biais du nombre des couches du matériau composite renforcé par des fibres.

12. Structure de carrosserie selon l'une des revendications 1 à 11, **caractérisée en ce que** les unités modulaires (12, 14, 16, 28) sont assemblées à partir de pièces détachées avant le montage.
